# EUROPÄISCHE PATENTSCHRIFT

(11) **EP 1 950 525 B1**
(45) Veröffentlichungstag und Bekanntmachung des Hinweises auf die Patenterteilung: **19.08.2009**
(21) Anmeldenummer: 07025062.6
(22) Anmeldetag: 22.12.2007
(51) Int. Cl.: G01B 7/00, G01D 5/14, F16L 55/48

(54) **Positionsdetektor für ein in einem Rohr bewegtes Teil**
Position detector for a component moved in a pipe
Détecteur de position pour un élément se déplaçant dans un tuyau

(30) Priorität: 26.01.2007 DE 102007004104
(43) Veröffentlichungstag der Anmeldung: 30.07.2008
(73) Patentinhaber: KSB Aktiengesellschaft, 67227 Frankenthal (DE)
(72) Erfinder: Zarth, Peter, 67317 Altleiningen (DE)

(56) Entgegenhaltungen:
- EP-A- 1 452 827
- WO-A-98/40699
- JP-A- 9 287 690
- JP-A- 11 014 301

## Beschreibung

Die Erfindung betrifft einen Positionsdetektor für ein in einem Rohr bewegtes Teil mit einem mit dem bewegten Teil verbundenen Permanentmagneten und einem an dem Rohr angeordneten Magnetfeldsensor.

Zur Positionsdetektion von bewegten Teilen in einer Rohrleitung sind neben mechanischen Erkennungsverfahren auch magnetische Erkennungsverfahren bekannt, wobei letztere als Verfahren der magnetischen Erkennung von Molchen in Rohrleitungen weit verbreitet sind. Dazu werden im Innern dieser Molche Permanentmagnete definierter Magnetfeldstärke eingebracht, deren Magnetfeld mittels außen an der Rohrleitung angebrachter Magnetfeldsensoren detektierbar ist. Dabei müssen die Magnetfeldsensoren eine ausreichende Ansprechempfindlichkeit in Form eines hinreichend großen Schaltabstands aufweisen, um die durch die Rohrwandstärke beabstandeten Molche sicher zu erkennen.

Durch die JP 11014301 A ist ein solcher Positionsdetektor bekannt. Dieser ist an einem zylinderförmigen Rohr angeordnet und detektiert das magnetische Feld eines Permanentmagneten, der an der inneren Wandung des zylinderförmigen Rohres entlang läuft. Zwei aus magnetisch hochpermeablem Material bestehende Bypasselemente liegen mit ihren Enden am Rohr an. Im Positionsdetektor sind die anderen Enden der Bypasselemente im Bereich eines magnetischen Sensors zueinander beabstandet, wobei der magnetische Sensor die Bypasselemente in deren Erstreckungsrichtung überlappt.

Durch die DE 103 09 142 A1 ist ein weiterer Positionsdetektor bekannt. Um eine stärkere Änderung des Magnetfeldes bei Annäherung des innerhalb einer Rohrleitung bewegten Teiles an den Magnetfeldsensor und damit eine bessere Detektion des bewegten Teiles zu erwirken, wird in der Schrift vorgeschlagen, dass das vom Permanentmagneten erzeugte Feld in einer Richtung verläuft, die bezüglich der Rohrachse eine radiale Erstreckungskomponente aufweist. Dies bedingt allerdings die Verwendung eines Molches mit einem speziell ausgerichteten Permanentmagneten. Zur weiteren Verbesserung der Empfindlichkeit umschließen Polschuhe das Rohr und in einem Luftspalt zwischen Polschuh-Flanschen sind ein bis zwei Magnetfeldsensoren positioniert. Neben dem Nachteil eines hohen Materialeinsatzes spricht die jeweils notwendige Anpassung der Polschuhe an unterschiedliche Krümmungsradien der zum Einsatz kommenden Rohre gegen diese Variante. Auch wird dadurch nicht der Umstand vermieden, dass die Rohrleitung aus einem nicht magnetisierbaren Material ausgeführt sein muss, um unerwünschte Fehlmessungen aufgrund einer magnetischen Schirmwirkung des Rohres oder einer im Laufe der Zeit stattfindenden Aufmagnetisierung desselben zu verhindern.

Bei Anwendungen, in denen zusätzliche Anforderungen an den Rohrleitungswerkstoff bestehen, ist gerade dies ein schwerwiegender Nachteil. So werden oftmals hohe Anforderungen an die mechanische Beanspruchbarkeit des Rohrleitungswerkstoffs und an dessen Medienresistenz gestellt, wie beispielsweise auf dem Gebiet der Meerwasserentsalzung, wo die Position von in hochdruckfesten Rohren bewegten Teilen in Form von Molchen oder Trennkörpern zu bestimmen ist. In Verbindung mit der Forderung nach einem nicht magnetisierbaren Werkstoff bedingt dies bislang den Einsatz von sehr teuren Rohrleitungsmaterialien.

Der Erfindung liegt somit das Problem zugrunde, einen einfach aufgebauten Positionsdetektor für in Rohren bewegte Teile zu entwickeln, der die Verwendung von magnetisierbaren Materialien als Rohrwerkstoff gestattet.

Die Lösung dieses Problems sieht vor, dass der Positionsdetektor Mittel zur magnetischen Sättigung des Rohres am Ort der Positionsdetektion aufweist. Durch die magnetische Sättigung des Rohres am Detektionsort wird die magnetische Schirmwirkung des Rohres außer Kraft gesetzt. Dies ermöglicht eine Detektion der Magnetfelder der in den bewegten Teilen angeordneten Permanentmagnete auch bei dickwandigen Rohrleitungen sowie eine Detektion mit wenig aufwendigen Mitteln wie beispielsweise mittels einfacher Messspulen. Lokale, mit der Zeit entstehende Aufmagnetisierungen des Rohres haben keine Verschlechterung des Messergebnisses zur Folge, weshalb auf spezielle, nicht magnetisierbare Rohrleitungen verzichtet werden kann. Dies ist bei Anwendungen von Vorteil, in denen zusätzliche Anforderungen an den Rohrwerkstoff bestehen, wie auf dem Gebiet der Meerwasserentsalzung. Der Rohrwerkstoff kann so unter anderem gemäß der Anforderungen an die mechanische Beanspruchbarkeit und an dessen Medienresistenz ausgewählt werden. Im Vergleich zur Verwendung von nichtmagnetisierbaren hochdruckfesten Rohren reduziert die Verwendung von magnetisierbaren Rohren die Herstellkosten einer solchen Anlage erheblich.

Nach einer vorteilhaften Ausgestaltung ist der Magnetfeldsensor durch mindestens eine außen am Rohr angeordnete Messspule gebildet. Dabei stellt eine Spule ein besonders kostengünstiges Mittel zur Messung von Magnetfeldänderungen dar, womit ein in einer Rohrleitung bewegtes Teil sicher detektierbar ist. Spezielle, teure Magnetfeldsensoren mit hohen Schaltabständen sind damit überflüssig.

Es hat sich als zweckmäßig erwiesen, dass die Messspule ein außen am Rohr angeordnetes Jochelement aus ferromagnetischem Material teilweise umschließt. Durch die Bündelung des magnetischen Flusses im Jochelement wird die Empfindlichkeit der Positionsdetektion erhöht, da Streuflüsse des magnetischen Flusses minimiert werden.

Nach einer weiteren Ausgestaltung bilden ein sich in Richtung des Rohres erstreckendes Jochelement und ein Teilabschnitt des Rohres einen magnetischen Kreis. Somit kann mit einem geringen Materialaufwand eine Befestigung auf einer quasi Geraden einer Ebene an jedem beliebigem Rohrdurchmesser erfolgen. Eine Umhüllung des Rohrumfanges erfolgt nicht.

Die magnetische Sättigung des Rohres erfolgt idealerweise durch ein oder mehrere außen am Rohr angeordnete Permanentmagnete. Die Stärke und die Position des oder der Permanentmagnete ist abhängig vom Rohrmaterial, der Rohrwandstärke und der Geometrie der Anordnung und davon, ob durch dessen bzw. deren Magnetfeld die magnetische Sättigung am Ort der Positionsdetektion ganz oder zu einem Teil erfolgen soll. Auch kann die Magnetisierung des Rohres durch eine oder mehrere Spulen, die mit einem Strom beaufschlagt werden, insbesondere unter Verwendung der Messspule, erfolgen. Ebenso sind Kombinationen möglich.

Nach anderen Ausgestaltungen ist ein in bezug auf das Rohr radial magnetisierter Permanentmagnet Bestandteil des Jochelements und/oder ist der Permanentmagnet zwischen zwei Schenkeln des Jochelements angeordnet.

Für das bewegte Teil sind verschieden gestaltete Permanentmagnete mit unterschiedlichen Magnetisierungsrichtungen verwendbar. Es hat sich als zweckmäßig erwiesen, das bewegte Teil mit einem, in bezug auf das Rohr axial magnetisierten, Permanentmagneten zu versehen. Dieser kann ring- oder scheibenförmig ausgebildet sein.

Es ist darüber hinaus daran gedacht, dass der Positionsdetektor Mittel zur Erfassung, Auswertung und/oder Anzeige von Messsignalen aufweist und/oder mit einer übergeordneten Steuerung und/oder Regelung verbunden ist. Dadurch finden die erfassten und/oder ausgewerteten Messsignale, die in einer Anlage Aufschluß über die Position der in einem Rohr bewegten Teile geben, Berücksichtigung in einer übergeordneten Steuerung und/oder Regelung. Beispielsweise ermöglichen in einer Meerwasserentsalzungsanlage die von einer Auswerteeinheit ermittelten Positionen von verwendeten Fluidtrennkörpern die Steuerung und/oder Regelung der verwendeten Armaturen und Pumpen.

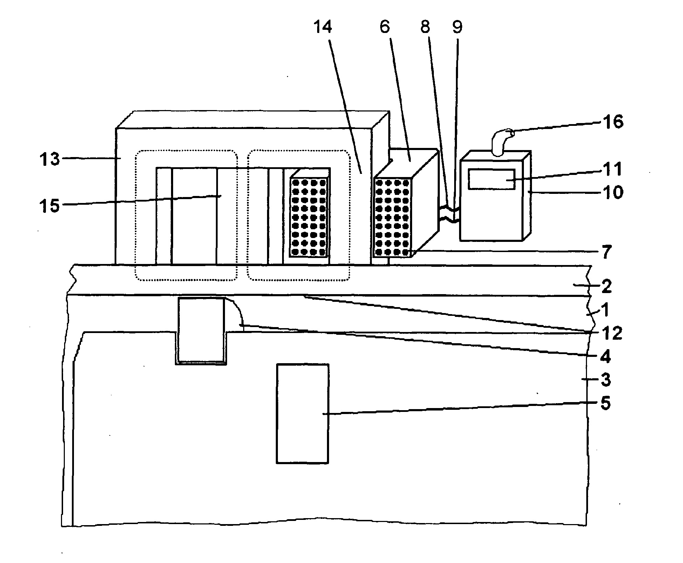

Ein Ausführungsbeispiel der Erfindung ist in der Zeichnung dargestellt und wird im Folgenden näher beschrieben.

In der Figur ist der Aufbau eines montierten Positionsdetektors dargestellt, wobei in einem Rohr 1 mit Rohrwand 2 ein bewegtes Teil als ein Molch 3 mit Dichtelementen 4 gezeigt ist. In dem Molch 3 ist ein ringförmiger, in Bezug auf das Rohr 1 axial magnetisierter Permanentmagnet 5 zur Erzeugung eines detektierbaren Magnetfeldes angeordnet. Das Rohr 1 ist aus magnetisierbarem hochdruckfesten Stahl gefertigt. Außen am Rohr 1 ist ein Magnetfeldsensor in Form einer Spule 6 mit Spulenwindungen 7 angeordnet. Die Spule 6 liefert Messsignale über Anschlussleitungen 8, 9 an eine Auswerteeinheit 10 mit Anzeigemittel 11.

Außen am Rohr 1 ist ein U-förmiges Jochelement 13 aus ferromagnetischem Material angeordnet, das im Bereich der Anlage an der Rohrwand 2 einen geschlossenen magnetischen Kreis bildet. Die Spule 6 umschließt einen Schenkel 14 des Jochelements 13. Zwischen den Schenkeln 14 des Jochelementes 13 ist ein Permanentmagnet 15 mittig angeordnet. Er erzeugt das magnetische Feld zur Sättigung des Rohres 1 am Ort der Positionsdetektion 12. Es handelt sich dabei vorteilhafterweise um einen in Bezug auf das Rohr 1 radial magnetisierten Permanentmagneten. Ebenso gut können mehrere einzelne Permanentmagnete Verwendung finden. Der magnetische Fluss des Permanentmagneten 15 bildet im Jochelement 13 und der Rohrwand 2 magnetische Kreise. Aufgrund des ferromagnetischen Materials des Jochelementes 13 werden die - punktiert gezeichneten - magnetischen Feldlinien des Permanentmagneten 15 gebündelt, wodurch die Messempfindlichkeit des Positionsdetektors erhöht wird.

Die magnetische Sättigung am Detektionsort 12 hebt die magnetische Schirmwirkung des Rohres 1 am Detektionsort 12 auf, wodurch das vom Molch 3 mit dem Permanentmagneten 5 ausgehende Magnetfeld außen am Rohr 1 einfach detektiert werden kann. Beim Vorbeilaufen des Molches 3 an der Messspule 6 erzeugt er in dieser einen Spannungsimpuls, der von der Auswerteeinheit 10 ausgewertet und/oder durch deren Anzeigemittel 11 angezeigt wird. Durch die Aufhebung der Schirmwirkung des Rohres 1 am Detektionsort 12 genügen eine geringe Anzahl an Spulenwindungen 7, um bei einer üblichen Geschwindigkeit des Molches 3 beachtliche Spannungsimpulse zu erzeugen. Die Spannung ändert sich proportional mit der Molchgeschwindigkeit.

Bei einer Annäherung des im Rohr 1 bewegten Molches 3 an den Positionsdetektor ändert das Magnetfeld des im Molch 3 befindlichen Permanentmagneten 5 den magnetischen Widerstand im Teil der Rohrwand, an der das Jochelement 13 anliegt. Infolgedessen wird der durch den Permanentmagneten 15 innerhalb der Schenkel des Jochelementes 13 ansonsten gleichmäßig ausgebildete magnetische Fluss bei Annäherung des Molches 3 und dessen darin befindlichen Permanentmagneten 5 beeinflusst. Dabei wird der magnetische Fluss zugunsten einer der beiden Schenkelseiten verschoben, so dass eine messbare Flußänderung innerhalb der Spule 6 entsteht. Dadurch entsteht bei einem Durchlaufen des Molches 3 ein in der Messspule 6 induzierter Spannungsimpuls wechselnder Polarität entsprechend der Änderung des magnetischen Flusses innerhalb der Messspule 6. Eine Auswerteeinheit 10 mit Anzeigemittel 11 dient zur Erfassung, Auswertung und/oder Anzeige der Messsignale und/oder berechneter Werte. Die Auswerteeinheit 10 ist mittels Leitung 16 an eine übergeordnete, hier nicht dargestellte, Steuerung und/oder Regelung von Pumpen und Armaturen einer Anlage angebunden.

Alternativ kann die Erzeugung der magnetischen Sättigung am Ort der Positionsdetektion 12 durch eine oder mehrere mit einem Strom beaufschlagte Spulen erfolgen. Alternativ kann die magnetische Sättigung des Rohres 1 zu einem Teil auf diese Weise erfolgen. In der gezeigten Anordnung dient die Messspule 6 alleine zur Detektion des Molches 3 in der Rohrleitung. Es ist alternativ möglich, mit der Messspule 6 den magnetischen Sättigungsfluss ganz oder zu einem Teil zu erzeugen. Die verwendete Spule 6 weist in der Figur einen durch einen Schenkel 14 des Jochelements 13 gebildeten Spulenkern auf, den die Spule 6 zur Erhöhung der Messempfindlichkeit umschließt.

## Patentansprüche

1. Positionsdetektor für ein in einem Rohr bewegtes Teil, wobei der Positionsdetektor mit einem mit dem bewegten Teil verbundenen Permanentmagneten und einem an dem Rohr angeordneten Magnetfeldsensor ausgestattet ist, **dadurch gekennzeichnet, dass** der Positionsdetektor Mittel zur magnetischen Sättigung des Rohres (1) am Ort der Positionsdetektion (12) aufweist.

2. Positionsdetektor nach Anspruch 1, **dadurch gekennzeichnet, dass** mindestens eine außen am Rohr (1) angeordnete Messspule (6) den Magnetfeldsensor bildet.

3. Positionsdetektor nach Anspruch 2, **dadurch gekennzeichnet, dass** die Messspule (6) ein außen am Rohr (1) angeordnetes ferromagnetisches Jochelement (13) teilweise umschließt.

4. Positionsdetektor nach Anspruch 1, 2 oder 3, **dadurch gekennzeichnet, dass** ein sich in Richtung des Rohres (1) erstreckendes Jochelement (13) mit einem angrenzenden Teilabschnitt des Rohres (1) einen magnetischen Kreis bildet.

5. Positionsdetektor nach Anspruch 1 bis 4, **dadurch gekennzeichnet, dass** die magnetische Sättigung des Rohres (1) durch ein oder mehrere außen am Rohr (1) angeordnete Permanentmagnete (15) erfolgt.

6. Positionsdetektor nach Anspruch 5, **dadurch gekennzeichnet, dass** ein in bezug auf das Rohr (1) radial magnetisierter Permanentmagnet (15) Bestandteil des Jochelements (13) ist.

7. Positionsdetektor nach Anspruch 5 oder 6, **dadurch gekennzeichnet, dass** der Permanentmagnet (15) zwischen zwei Schenkeln (14) des Jochelements (13) angeordnet ist.

8. Positionsdetektor nach einem der Ansprüche 1 bis 7, **dadurch gekennzeichnet, dass** das bewegte Teil mit einem in bezug auf das Rohr (1) axial magnetisierten Permanentmagneten (5) verbunden ist.

9. Positionsdetektor nach einem der Ansprüche 1 bis 8, **dadurch gekennzeichnet, dass** der Positionsdetektor Mittel (10) zur Erfassung, Auswertung und/oder Anzeige von Signalen des Magnetfeldsensors aufweist.

10. Positionsdetektor nach einem der Ansprüche 1 bis 9, **dadurch gekennzeichnet, dass** der Positionsdetektor mit einer übergeordneten Steuerung und/oder Regelung verbunden ist.

## Claims

1. Position detector for a part moved inside a pipe, the position detector being equipped with a permanent magnet connected to the moved part and a magnetic field sensor arranged on the pipe, **characterized in that** the position detector has means for magnetically saturating the pipe (1) at the site of position detection (12).

2. Position detector according to Claim 1,
**characterized in that** at least one measuring coil (6) arranged on the outside of the pipe (1) forms the magnetic field sensor.

3. Position detector according to Claim 2,
**characterized in that** the measuring coil (6) partly surrounds a ferromagnetic armature element (13) arranged on the outside of the pipe (1).

4. Position detector according to Claim 1, 2 or 3, **characterized in that** an armature element (13) which extends in the direction of the pipe (1) forms a magnetic circuit with an adjacent portion of the pipe (1).

5. Position detector according to Claims 1 to 4, **characterized in that** the pipe (1) is magnetically saturated by one or more permanent magnets (15) arranged on the outside of the pipe (1).

6. Position detector according to Claim 5,
**characterized in that** a permanent magnet (15) which is magnetized radially in relation to the pipe (1) is a component of the armature element (13).

7. Position detector according to Claim 5 or 6, **characterized in that** the permanent magnet (15) is arranged between two limbs (14) of the armature element (13).

8. Position detector according to one of Claims 1 to 7, **characterized in that** the moved part is connected to a permanent magnet (5) which is magnetized axially in relation to the pipe (1).

9. Position detector according to one of Claims 1 to 8, **characterized in that** the position detector has means (10) for detecting, evaluating and/or displaying signals from the magnetic field sensor.

10. Position detector according to one of Claims 1 to 9, **characterized in that** the position detector is connected to a higher-level control and/or regulating means.

## Revendications

1. Détecteur de position pour une pièce en mouvement dans un tube, le détecteur de position étant équipé d'un aimant permanent relié à la pièce en mouvement et d'un détecteur de champ magnétique monté sur le tube, **caractérisé en ce que** le détecteur de position présente des moyens de saturation magnétique du tube (1) à l'endroit de la détection de la position (12).

2. Détecteur de position selon la revendication 1, **caractérisé en ce que** le détecteur de champ magnétique est formé par au moins une bobine de mesure (6) disposée à l'extérieur sur le tube (1).

3. Détecteur de position selon la revendication 2, **caractérisé en ce que** la bobine de mesure (6) entoure partiellement un élément de culasse ferromagnétique (13) disposé à l'extérieur sur le tube (1).

4. Détecteur de position selon la revendication 1, 2 ou 3, **caractérisé en ce qu'**un élément de culasse (13) qui s'étend en direction du tube (1) forme un circuit magnétique avec une section partielle limitrophe du tube (1).

5. Détecteur de position selon les revendications 1 à 4, **caractérisé en ce que** la saturation magnétique du tube (1) est réalisée par un ou plusieurs aimants permanents (15) disposés à l'extérieur sur le tube (1).

6. Détecteur de position selon la revendication 5, **caractérisé en ce qu'**un aimant permanent (15) magnétisé dans le sens radial par rapport au tube (1) fait partie intégrante de l'élément de culasse (13).

7. Détecteur de position selon la revendication 5 ou 6, **caractérisé en ce que** l'aimant permanent (15) est disposé entre deux branches (14) de l'élément de culasse (13).

8. Détecteur de position selon l'une des revendications 1 à 7, **caractérisé en ce que** la pièce en mouvement est reliée avec un aimant permanent (5) magnétisé dans le sens axial par rapport au tube (1).

9. Détecteur de position selon l'une des revendications 1 à 8, **caractérisé en ce que** le détecteur de position présente des moyens (10) pour acquérir, analyser et/ou afficher les signaux du détecteur de champ magnétique.

10. Détecteur de position selon l'une des revendications 1 à 9, **caractérisé en ce que** le détecteur de position est relié avec une commande et/ou un régulateur de supervision.
